Europäisches Patentamt

**European Patent Office**

**Office européen des brevets**

(11) Numéro de publication: **0 250 334 B1**

(19)

(12) FASCICULE DE BREVET EUROPEEN

(45) Date de publication de fascicule du brevet: **22.07.92** (51) Int. Cl.⁵: **H04L 12/28**

(21) Numéro de dépôt: **87401392.3**

(22) Date de dépôt: **19.06.87**

(54) Interface de liaison d'un appareillage à un câble coaxial.

(30) Priorité: **20.06.86 FR 8608930**

(43) Date de publication de la demande:
**23.12.87 Bulletin 87/52**

(45) Mention de la délivrance du brevet:
**22.07.92 Bulletin 92/30**

(84) Etats contractants désignés:
**AT BE CH DE ES FR GB GR IT LI LU NL SE**

(56) Documents cités:
**EP-A- 0 109 229      EP-A- 0 145 407**
**WO-A-83/03507        FR-A- 2 544 569**
**GB-A- 2 064 918      US-A- 4 266 842**
**US-A- 4 337 465**

**PATENT ABSTRACTS OF JAPAN, vol. 9, no. 10 (E-290)(1733), 17 janvier 1985; & JP-A-59158644**

(73) Titulaire: **Société Anonyme dite: CEGELEC**
**13, rue Antonin Raynaud**
**F-92309 Levallois-Perret(FR)**

(72) Inventeur: **Eyraud, Bernard**
**30 rue de Port Royal**
**F-78470 Saint Remy les Chevreuse(FR)**

(74) Mandataire: **Weinmiller, Jürgen et al**
**Lennéstrasse 9 Postfach 24**
**W-8133 Feldafing(DE)**

## Description

La présente invention concerne une interface de liaison d'un appareillage à un câble coaxial, en vue de la transmission d'informations entre cet appareillage et au moins un autre, sous forme de signaux haute-fréquence par l'intermédiaire du câble coaxial, et en particulier une interface pour coupleur du type permettant une connexion en un emplacement quelconque situé entre les extrémités d'un câble coaxial, sans avoir à sectionner ce câble.

Les câbles coaxiaux sont souvent choisis comme support de transmission dans les réseaux locaux à stations multiples, en raison de leurs performances. Les besoins d'évolution, en particulier d'extension en nombre de stations, de ces réseaux conduisent à rechercher des solutions permettant de raccorder les équipements d'émission et de réception des appareillages aux câbles coaxiaux, de manière simple et fiable.

Dans de nombreuses applications et en particulier en automatisme, il est essentiel d'éliminer les risques d'indisponibilité totale d'un réseau de transmission par suite d'une défaillance affectant l'une des stations qu'il dessert.

Ceci implique la recherche de solutions qui permettent d'assurer une transmission efficace des informations à transmettre, tout en évitant au maximum celle des défauts et ce pour des fréquences de transmission élevées, avec les contraintes bien connues qu'implique l'usage de telles fréquences.

Pour se faire, on s'efforce de réaliser des coupleurs dotés d'interfaces de liaison capables de ne pas affecter la disponibilité du câble coaxial, c'est-à-dire de ne pas perturber les échanges d'information, en cas de défaut interne d'un composant de l'interface ou de perturbation provenant de l'appareillage desservi.

On s'efforce également de doter les coupleurs de prise de dérivation reliant de manière la plus fiable possible lesdites interfaces de liaison au câble coaxial.

Dans une forme de réalisation connue, les interfaces de liaison sont reliées aux prises de dérivation par l'intermédiaire de contacts de relais électromagnétiques qui permettent d'isoler ces interfaces de liaison des prises de dérivation qui les desservent et par conséquent des câbles coaxiaux, sur lesquels sont montés ces prises, lorsque les contacts de relais sont ouverts. Cette solution électromécanique n'est toutefois pas pleinement satisfaisante, en particulier en cas de perturbations brèves dont la durée est inférieure au temps de réponse des relais.

On cherche donc un coupleur de type statique, apte à assurer un fonctionnement sans perturbation des échanges d'information sur le câble coaxial auquel il est relié, même si l'un de ses composants vient à être défaillant.

Ainsi le document GB-A- 2 064 618 décrit un système où un appareillage est relié à une liaison, pour la transmission d'information sous la forme de signaux haute fréquence, par l'intermédiaire d'un transformateur d'isolement et d'un pont de transmission sécuritaire.

La présente invention propose une interface de ce type pour la mise en liaison d'un appareillage à un câble coaxial, en vue de la transmission d'informations sous la forme de signaux haute fréquence, entre ce premier appareillage et au moins un autre appareillage, compatible, par l'intermédiaire du câble coaxial, l'interface étant munie d'une unité d'émission incorporant un pont symétrique, dit sécuritaire, de mise sous tension des bornes d'un premier enroulement d'un transformateur, dit d'isolement, dont un second enroulement est relié par ses bornes aux conducteurs du câble, le pont étant d'une part commandé par les sorties d'amplificateurs de commande, dont les entrées sont communément reliées en sortie d'une liaison de transmission de données d'information du premier appareillage, et d'autre part composé de quatre branches incorporant des transistors de commutation du courant traversant chaque branche qui sont commandés en opposition par groupe de deux branches non adjacentes, l'une des diagonales du pont étant alimentée par des bornes d'alimentation en courant continu de l'interface et l'autre étant reliée aux bornes du premier enroulement du transformateur.

Selon une caractéristique de l'invention, cette interface comporte une unité de validation d'émission, de type ET logique, composée à l'aide de deux amplificateurs de validation qui sont activés séparément, via une liaison de validation par le premier appareillage et qui valident conjointement les sorties de deux amplificateurs de commande de l'unité d'émission aux entrées desquels ils sont reliés en parallèle.

L'invention, ses caractéristiques et ses avantages sont précisés dans la description qui suit en liaison avec la figure unique, qui présente le schéma électrique d'une interface de raccordement selon l'invention.

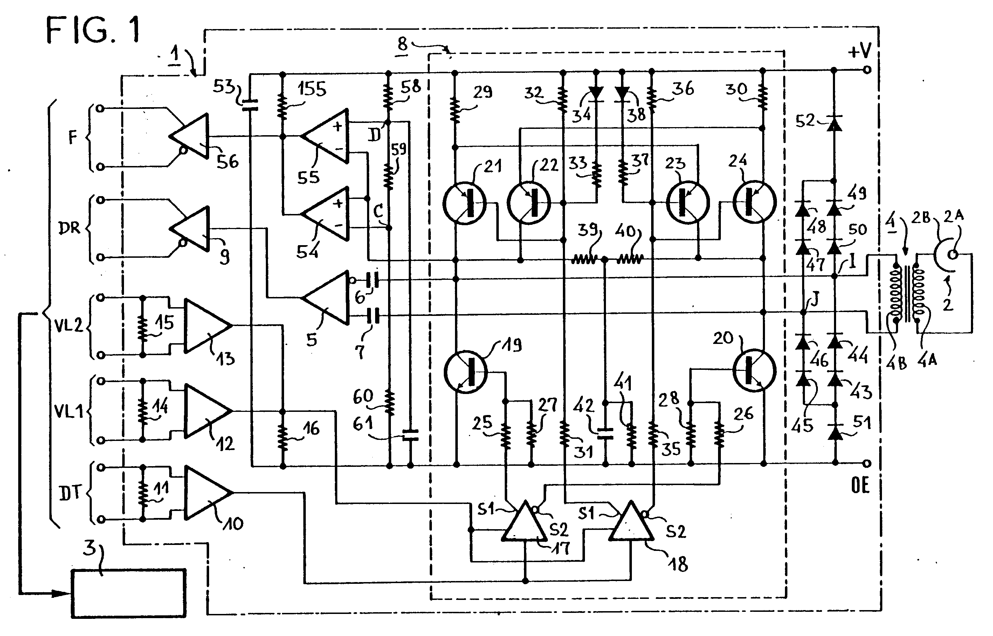

L'interface 1 présentée figure 1 est destinée à être insérée entre un câble coaxial 2 et un appareillage 3 susceptible d'échanger des informations sous forme numérique pour l'intermédiaire du câble coaxial 2 avec au moins un autre appareillage, non figuré ; ces appareillages sont par exemple des stations d'un réseau local ayant le câble coaxial 2 comme support commun de transmission.

Les appareillages ne sont pas décrits ici, dans la mesure où ils ne concernent qu'indirectement l'invention, ils comportent généralement une logique de commande, généralement organisée autour d'un processeur et sont agencés pour pouvoir émettre et recevoir des informations sous forme numérique par l'intermédiaire de liaisons de transmission de données connues en elles-mêmes et représentées ici par deux liaisons bifilaires DT et DR, respectivement réservées l'une à la transmission, vers le câble coaxial 2, des données émises par l'appareillage 3 et l'autre à la réception, au profit de cet appareillage 3, des données transmises par le câble coaxial 2.

Dans l'exemple de réalisation proposé les deux liaisons bifilaires DT et DR sont associées à une liaison bifilaire dupliquée VL1, VL2 destinée à assurer, au niveau de l'interface 1, la validation en émission des données d'information issues de l'appareillage 3 et transmises par la liaison bifilaire DT, ainsi qu'à une liaison bifilaire de signalisation de défauts F reliant l'interface 1 à l'appareillage 3 pour signaler à ce dernier les défauts affectant cette interface 1.

Le câble coaxial 2, dont seuls sont symbolisés ici l'âme conductrice 2A et le conducteur extérieur 2B, est relié à un enroulement 4A d'un transformateur d'isolement 4 dont un second enroulement 4B dessert l'interface 1.

Classiquement l'âme conductrice 2A et le conducteur extérieur 2B du câble coaxial sont reliés chacun à une des deux bornes d'extrémité de l'enroulement 4A, par l'intermédiaire d'une prise de dérivation.

Les extrémités du second enroulement 4B du transformateur sont reliées chacune à une borne d'accès différente I ou J de l'interface 1 ; ces bornes I, J sont reliées dans l'interface 1 d'une part, chacune à une entrée d'un amplificateur de réception 5, via une capacité de transmission 6 ou 7, d'autre part chacune à une sortie différente d'une unité d'émission 8.

Les variations de tension apparaissant aux extrémités du second enroulement 4B, lorsque des données sont reçues au travers du câble coaxial 2, sont classiquement appliquées aux entrées de l'amplificateur de réception 5, constitué par exemple à l'aide d'un classique amplificateur 9 répondant à la norme RS 485 dont les sorties complémentaires fournissent des signaux en opposition de phase, chacune à un fil de la liaison bifilaire réceptrice DR en fonction du signal fourni par le second enroulement 4B.

L'unité d'émission 8 est supervisée par l'appareillage 3 qui fournit les données d'information à transmettre et un double signal de validation, les unes par la liaison bifilaire émettrice DT, l'autre par les deux liaisons bifilaires VL1, VL2.

Les données d'information transmises par les fils de la liaison bifilaire émettrice DT sont appliquées aux bornes d'entrée d'un amplificateur opérationnel dit d'émission 10, ces bornes étant classiquement reliées entre elles par une résistance 11 d'entrée de valeur égale à l'impédance caractéristique de la liaison bifilaire émettrice, par exemple cent vingt ohms.

Les deux composantes du double signal de validation généré, de manière connue en elle-même par l'appareillage 3, sont appliquées l'une à un premier amplificateur opérationnel, dit de validation, 12 par la liaison VL1, l'autre à un second amplificateur opérationnel, dit de validation 13, par la liaison VL2. Les amplificateurs de validation 12 et 13 sont attaqués de manière analogue à l'amplificateur d'émission 10, ils comportent eux aussi une résistance d'entrée 14 ou 15, identique à la résistance d'entrée 11.

Les deux amplificateurs de validation 12 et 13 sont reliés chacun par leur sortie d'une part à une même borne d'une résistance 16, qui est de valeur moyenne, par exemple mille ohms, et dont l'autre borne est au potentiel zéro électrique OE de l'interface 1, d'autre part à l'entrée de la commande "trois états" des sorties de deux amplificateurs opérationnels de commande 17 et 18 de l'unité d'émission 8.

Ces amplificateurs de commande 17 et 18 ont leurs sorties respectives à l'état haute impédance, si les amplificateurs 12 et 13 ne fournissent pas conjointement la tension de validation positive qui leur est nécessaire.

Ceci se traduit en particulier par le fait que la présence d'un seul signal de validation, ou le fonctionnement convenable d'un seul des deux amplificateurs de validation laisse les amplificateurs de commande en un état haute impédance pour lequel l'unité d'émission 8 présente une impédance élevée au niveau des bornes I et J et n'est susceptible de perturber ni la réception des données transmises à l'interface 1 par le câble coaxial 2, ni les échanges sur ce câble coaxial.

Par contre en cas de validation convenable par l'intermédiaire des deux composantes VL1, VL2 de la liaison dupliquée, les deux amplificateurs de commande 17 et 18 fournissent les tensions nécessaires au fonctionnement de l'unité d'émission, de la manière évoquée ci-dessous.

Pour ce faire, les bornes d'entrées des amplificateurs de commande 17, 18 sont reliées en parallèle en sortie de l'amplificateur d'émission 10 qui leur fournit les données d'information en série et sous forme binaire. Ces deux amplificateurs de commande 17 et 18 fournissent des signaux de sortie identiques et simultanés, l'une des sorties S1 de chacun fournissant une tension reproduisant le signal d'entrée qui est appliqué, l'autre sortie S2 produisant classiquement un signal en opposition de phase par rapport à celui fourni par la sortie S1 et ceci si les amplificateurs de commande 17 et 18 sont convenablement validés, comme indiqué plus haut.

Les sorties des amplificateurs de commande 17 et 18 permettent de contrôler par l'intermédiaire de transistors 19 à 24 la conduction dans les quatre branches d'un pont symétrique de mise sous tension dont une diagonale a ses extrémités reliées aux bornes d'alimentation en énergie continue de l'interface, référencées respectivement +V et OE, alors que les extrémités de l'autre diagonale sont reliées respectivement l'une à la borne I et l'autre à la borne J et par conséquent chacune à une borne différente du premier enroulement 4B du transformateur 4.

Les deux branches du pont de mise sous tension qui sont reliées au potentiel zéro électrique OE de l'interface 1 comportent chacune un transistor 19 ou 20, de type NPN, dont l'émetteur est relié au potentiel OE et dont le collecteur est relié au point I pour le transistor 19 et au point J pour le transistor 20. Les bases des transistors 19 et 20 sont commandées en opposition de phase par l'amplificateur de commande 17 à la sortie S1 duquel la base du transistor 19 est relié, via une résistance 25 de faible valeur, par exemple cent quatre vingt ohms, alors que la base du transistor 20 est reliée à la sortie S2 de cet amplificateur de commande 17, via une résistance 26 identique à la résistance 25.

Deux résistances de polarisation 27 et 28 relient respectivement la base de chaque transistor 19 ou 20 au potentiel OE.

En conséquence en l'absence de validation au niveau des amplificateurs de commande 17 et 18, les transistors 19 et 20 présentent une haute impédance respectivement au niveau des points I et J, comme indique plus haut, alors qu'en tout autre cas la polarisation de la base de l'un de ces transistors 19, 20 est tel qu'il puisse conduire si son collecteur est porté à un potentiel positif convenable, alors que la polarisation de la base de l'autre transistor bloque irrémédiablement ce dernier.

Les deux branches du pont de mise sous tension qui sont reliées au potentiel positif +V de l'interface 1 comportent au moins un et ici, pour des raisons de sécurité, deux transistors, 21, 22 ou 23, 24, de type PNP, en parallèle dont les émetteurs sont reliés deux à deux au potentiel +V, via une résistance de limitation de courant 29 pour les transistors 21 et 23 et via une résistance de limitation de courant 30 pour les transistors 22 et 24, ces résistances 29 et 30 étant identiquement de faible valeur, par exemple de l'ordre de la dizaine d'ohms. Ceci permet d'assurer la tenue de l'interface aux courts-circuits sur le câble coaxial 2. Les collecteurs des transistors 21 et 22 d'une branche sont reliés en parallèle au point I, alors que ceux des transistors 23 et 24 de l'autre branche correspondante le sont au point J.

Les bases des transistors 21 et 22 sont reliées en parallèle à la sortie S1 de l'amplificateur de commande 18, via une résistance ajustable d'équilibrage de pont 31, et au potentiel +V par, en parallèle, une résistance 32 de valeur forte, par exemple de l'ordre de dix mille ohms, et une résistance 33 relativement faible par exemple de l'ordre de cent ohms en série avec une diode 34 dont la cathode est au potentiel +V.

De manière analogue les bases des transistors 23 et 24 sont reliées en parallèle à la sortie S2 de l'amplificateur de commande 18, via une résistance ajustable d'équilibrage de Pont 35 et au potentiel +V par en parallèle une résistance 36 et une résistance 37 en série avec une diode 38 dont la cathode est au potentiel +V, les résistances 36, 37 étant respectivement identiques aux résistances 32, 33.

En dernier lieu, les collecteurs des transistors 21, 22, d'une part, et des transistors 23, 24, d'autre part qui sont respectivement reliés les uns au point I, les autres au point J, sont aussi respectivement reliés les uns par une résistance 39, les autres par une résistance 40 à une borne d'un circuit à résistance 41 et capacité 42, en parallèle, dont l'autre borne est reliée au potentiel zéro électrique OE ; les résistances 39, 40 sont identiques et de forte valeur, par exemple dix mille ohms, alors que la résistance 41 est de très forte valeur, par exemple cent mille ohms.

La transmission des données fournies par l'appareillage 3, via la liaison bifilaire émettrice DT et l'amplificateur d'émission 10, ne peut s'effectuer, comme on l'a vu, que si les amplificateurs de commande 17, 18 sont convenablement validés.

En fonction du niveau du signal binaire fourni par l'amplificateur d'émission 10, lorsque les amplificateurs de commande 17, 18 sont alimentés, alternativement soit les transistors 19, 23 et 24 sont bloqués, alors que les transistors 20, 21, 22 conduisent pour un niveau binaire zéro du signal fourni par l'amplificateur d'émission 10, soit les transistors 20, 21, 22 conduisent alors que les transistors 19, 23 et 24 sont bloqués, les collecteurs des transistors 20 ou 21 étant alternativement reliés à un potentiel positif, via le second enroulement 4B et les autres transistors simultanément conducteurs.

De ce fait dans le premier cas, la borne J est reliée au potentiel zéro électrique par le transistor 20 conducteur, alors que la borne I est porté à un potentiel positif peu différent de +V par les transistors 21, 22 en parallèle.

Dans le second cas, les potentiels des bornes I et J sont inversées par rapport au cas précédent et il y a donc inversion du potentiel appliqué aux bornes I et J et par conséquent au second enroulement 4B à chaque transition du signal fourni par l'amplificateur d'émission 10.

Dans la forme de réalisation présentée l'interface est protégée contre les surtensions, éventuellement induites par l'intermédiaire du premier enroulement, par un pont de diodes à quatre branches composées chacune de deux diodes en série 43, 44 ou 45, 46 ou 47, 48 ou 49, 50 reliées selon une diagonale aux bornes I et J et selon l'autre aux potentiels OE et +V via deux diodes d'extrémité 51 et 52 ; une capacité 53 relié classiquement les potentiels OE et +V.

Deux amplificateurs opérationnels 54, 55 de signalisation de défauts commandent un même amplificateur opérationnel 56 qui attaque les deux fils de la liaison de signalisation de défauts F par ses sorties complémentaires.

L'entrée non-inverseuse de l'amplificateur 54 est relié à la borne I en parallèle avec l'entrée inverseuse de l'amplificateur 55, alors que l'entrée inverseuse de ce dernier est reliée d'une part au potentiel +V par une résistance moyenne 58, d'autre part via une résistance 59 plus faible, à l'entrée inverseuse de l'amplificateur 54, cette dernière étant elle-même reliée au potentiel zéro électrique OE par une résistance 60, une capacité 61 reliant le point commun aux résistance 58 et 59 à ce dernier potentiel.

Les amplificateurs opérationnels 54, 55 forment un montage à seuils aux bornes du second enroulement 4B, ils permettent donc de détecter tout défaut conduisant à une différence de potentiel trop forte ou trop faible aux bornes de ce second enroulement et par conséquent à un signal hors norme sur le câble coaxial 2 par l'interface en raison d'un défaut interne de cette dernière.

**Revendications**

1. Interface de liaison (1) d'un premier appareillage (3), à un câble coaxial (2), en vue de la transmission d'informations sous la forme de signaux haute fréquence, entre ce premier appareillage et au moins un autre appareillage, compatible, par l'intermédiaire du câble coaxial, l'interface étant munie d'une unité d'émission incorporant un pont symétrique, dit sécuritaire, de mise sous tension des bornes d'un premier enroulement (4B) d'un transformateur, dit d'isolement, dont un second enroulement (4A) est relié par ses bornes aux conducteurs (2A, 2B) du câble, le pont étant d'une part commandé par les sorties d'amplificateurs de commande (17, 18), dont les entrées sont communément reliées en sortie d'une liaison de transmission de données d'information (DT) du premier appareillage (3), et d'autre part composé de quatre branches incorporant des transistors (19 à 24) de commutation de courant traversant chaque branche qui sont commandés en opposition par groupe de deux branches non adjacentes, l'une des diagonales du pont étant alimentée par des bornes (+V, OE) d'alimentation en courant continu de l'interface et l'autre étant reliée aux bornes du premier enroulement du transformateur, caractérisée en ce que cette interface comporte une unité de validation d'émission, de type ET logique, composée à l'aide de deux amplificateurs de validation (12, 13), qui sont activés séparément, via une liaison de validation (VL1, VL2) par le premier appareillage (3) et qui valident conjointement les sorties de deux amplificateurs de commande (17, 18) de l'unité d'émission aux entrées desquels ils sont reliés en parallèle.

2. Interface de liaison selon la revendication 1, caractérisée en ce que le pont de l'unité d'émission est constitué d'une part par deux branches, communément reliées au potentiel zéro électrique (OE) de l'interface, qui comportent chacune un transistor (19 ou 20) de type NPN, apte à commuter la liaison entre ce potentiel et une des bornes (I, J) de l'enroulement (4B) affecté à l'interface, ces deux transistors étant commandés en opposition l'un de l'autre par les amplificateurs de commande (17, 18), d'autre part deux branches communément reliées au potentiel positif (+V) de l'interface, qui comportent chacune une paire de transistors (21, 22 ou 23, 24), de type PNP, aptes à commuter la liaison entre ce potentiel positif et une des bornes (I, J) de l'enroulement (4B) affecté à l'interface, chaque paire de transistors étant commandée en opposition l'une de l'autre par les amplificateurs de commande (17, 18) et simultanément avec celui des transistors (19 ou 20), isolés dans leurs branches, qui se trouve dans la branche non adjacente.

3. Interface de liaison selon la revendication 1, caractérisée en ce qu'elle comporte une unité de détection de fautes d'interface, comportant un montage à seuil minimum et à seuil maximum de tension qui est constitué à l'aide de deux amplificateurs opérationnels (54, 55) dont les sorties sont reliées en entrée d'un amplificateur d'attaque (56) de liaison de signalisation de faute (F) et dont les entrées différentes sont reliées par deux, les unes à l'une des bornes (I) de l'enroulement (4B) affecté à l'interface, les autres en des points intermédiaires différents (C, D) d'un pont diviseur à trois résistances (58, 59, 60) branché aux bornes d'alimentation continue de l'interface.

## Claims

1. Interface (1) for connecting a first device (3) to a coaxial cable (2) to transmit information in the form of high-frequency signals between the latter device and at least one other compatible device via the coaxial cable, the interface being provided with a transmit unit incorporating a symmetrical safety bridge for energising the terminals of a first winding (4B) of an isolating transformer of which a second winding (4A) is connected to the conductors (2A, 2B) of the cable, the bridge being controlled by the outputs of control amplifiers (17, 18) whose inputs are connected in common to the output of an information data transmission link (DT) of the first device (3) and comprising four branches incorporating transistors (19 through 24) switching the current through each branch which are controlled in opposition by groups of two non-adjacent branches, one diagonal of the bridge being connected to the DC power supply terminals (+V, OE) of the interface and the other being connected to the terminals of the first winding of the transformer, characterised in that said interface comprises a transmit enable unit of the logical AND operator type comprising two enabling amplifiers (12, 13) activated separately via an enabling link (VL1, VL2) by the first device (3) and which conjointly enable the outputs of two control amplifiers (17, 18) of the transmit unit to the inputs of which they are connected in parallel.

2. Connecting interface according to claim 1 characterised in that the bridge of the transmit unit comprises two branches connected in common to the zero volts electrical potential (OE) of the interface which each comprise an NPN transistor (19 or 20) adapted to switch the link between this potential and one terminal (I, J) of the winding (4B) assigned to the interface, the two transistors being controlled in opposition by the control amplifiers (17, 18) and two branches connected in common to the positive potential (+V) of the interface which each comprise a pair of PNP transistors (21, 22 or 23, 24) adapted to switch the link between this positive potential and one terminal (I, J) of the winding 4B assigned to the interface, each pair of transistors being controlled in opposition by the control amplifiers (17, 18) and simultaneously with that of the transistors (19 or 20) isolated in their branch which is in the non-adjacent branch.

3. Connecting interface according to claim 1 characterised in that it comprises an interface fault detector unit comprising a minimum and maximum voltage threshold circuit based on two operational amplifiers (54, 55) whose outputs are connected to the input of a fault signalling link (F) drive amplifier (56) and whose different inputs are connected in pairs to the terminal (I) of the winding (4B) assigned to the interface and to different intermediate points (C, D) of a three-resistor (58, 59, 60) divider bridge connected between the DC power supply terminals of the interface.

## Patentansprüche

1. Schnittstelle (1) zum Anschluß eines ersten Geräts (3) an ein Koaxialkabel (2) für die Übertragung von Informationen in Form von Hochfrequenzsignalen zwischen diesem ersten Gerät und mindestens einem weiteren damit kompatiblen Gerät über das Koaxialkabel, wobei die Schnittstelle mit einer Sendeeinheit versehen ist, die eine symmetrische Sicherungsbrücke zur Spannungsbeaufschlagung der Klemmen einer ersten Wicklung (4B) eines Isoliertransformators enthält, von dem eine zweite Wicklung (4A) mit ihren Klemmen an die Leiter (2A, 2B) des Kabels angeschlossen sind, wobei die Brücke einerseits von den Ausgängen von Steuerverstärkern (17, 18) gesteuert wird, deren Eingänge gemeinsam mit dem Ausgang eines Informationsdatenübertragungsanschlusses (DT) des ersten Geräts (3) verbunden sind, und andererseits aus vier Zweigen besteht, die Transistoren (19 bis 24) zum Schalten des jeden Zweig durchfließenden Stroms enthalten, welche gegensinnig in Gruppen zu zwei nichtbenachbarten Zweigen angesteuert werden, wobei eine der Brückendiagonalen mit den Gleichstromversorgungsanschlüssen (+V, OE) der Schnittstelle und die andere mit den Klemmen der ersten Wicklung des Transformators verbunden ist, dadurch gekennzeichnet, daß diese Schnittstelle eine Sendefreigabeeinheit vom logischen UND-Typ aufweist, die aus zwei Freigabeverstärkern (12, 13) besteht, welche vom ersten Gerät (3) über eine Freigabeanschluß (VL1, VL2) getrennt aktiviert werden und gemeinsam die Ausgänge der beiden Steuerverstärker (17, 18) der Sendeeinheit freigeben, an deren Eingänge sie parallel angeschlossen sind.

2. Anschlußschnittstelle nach Anspruch 1, dadurch gekennzeichnet, daß die Brücke der Sendeeinheit zum einen aus zwei Zweigen, die gemeinsam an das elektrische Nullpotential (OE) der Schnittstelle angeschlossen sind und jeweils einen Transistor (19 oder 20) vom Typ NPN aufweisen, der die Verbindung zwischen dem Nullpotential und einer der Klemmen (I, J) der der Schnittstelle zugehörigen Wicklung (4B) umschalten kann, wobei diese beiden Transistoren durch die Steuerverstärker (17, 18) gegensinnig angesteuert werden, und zum anderen aus zwei gemeinsam an das positive Potential (+V) der Schnittstelle angeschlossenen Zweigen besteht, die je ein Paar Transistoren (21, 22 oder 23, 24) vom Typ PNP aufweisen, die die Schaltverbindung zwischen dem positiven Potential und einem der Anschlüsse (I, J) der der Schnittstelle zugehörigen Wicklung (4B) herstellen können, wobei die beiden Transistorpaare durch die Steuerverstärker (17, 18) gegensinnig und gleichzeitig mit demjenigen der in ihren Zweigen isolierten Transistoren (19 oder 20) angesteuert wird, der sich im nichtbenachbarten Zweig befindet.

3. Anschlußschnittstelle nach Anspruch 1, dadurch gekennzeichnet, daß sie eine Einheit zur Erfassung von Schnittstellenstörungen aufweist, die eine Minimum- und eine Maximumschwellenspannungsschaltung umfaßt und aus zwei Operationsverstärkern (54, 55) besteht, deren Ausgänge an die Eingänge eines Ausgangsverstärkers (56) zum Fehlersignalisationsanschluß (F) angeschlossen sind, und deren unterschiedliche Eingänge paarweise mit einem der Anschlüsse (I) der der Schnittstelle zugehörigen Wicklung (4B), bzw. mit verschiedenen Zwischenverbindungsstellen (C, D) einer aus drei Widerständen (85, 59, 60) bestehenden Teilerbrücke verbunden sind, die zwischen die Gleichstromversorgungsanschlüsse der Schnittstelle geschaltet ist.

FIG. 1

EP 0 250 334 B1